# FASCICULE DE BREVET EUROPEEN

(11) **EP 1 126 623 B1**
(45) Date de publication et mention de la délivrance du brevet: **04.10.2006**
(21) Numéro de dépôt: 00103123.6
(22) Date de dépôt: 16.02.2000
(51) Int. Cl.: H04B 1/38, G04G 1/00, G04B 47/00

(54) **Montre-téléphone incluant une carte SIM dans son boitier**
Telefonarmbanduhr mit intergrierten SIM karte
Telephone wristwatch with integrated SIM card

(43) Date de publication de la demande: 22.08.2001
(73) Titulaire: ASULAB S.A., 2074 Marin (CH)
(72) Inventeur: Martin, Jean-Claude, 2000 Neuch-tel (CH); Dubugnon, Dominique, 1163 Etoy (CH)
(74) Mandataire: Ravenel, Thierry Gérard Louis

(56) Documents cités:
- DE-A- 4 029 517
- DE-U- 29 809 862
- US-A- 5 564 096

## Description

La présente invention est relative à une montre-téléphone destinée conjointement à afficher l'heure et à être utilisée dans un système de communications mobiles, cette montre comprenant un boîtier composé d'une glace, d'une carrure et d'un fond, un logement pratiqué dans le fond susceptible de recevoir, de manière amovible, une carte SIM (Subscriber Identity Module) permettant d'accéder au système de communications mobiles et un couvercle assurant la fermeture du logement, ce couvercle étant attenant au fond au moyen d'une articulation.

Le modèle d'utilité DE 298 09 862 U1 et plus particulièrement la figure 2 décrit déjà dans les grandes lignes une montre-téléphone telle qu'explicitée au paragraphe ci-dessus. Il s'agit là cependant d'une description très succincte. En effet, la montre-bracelet téléphone de ce document en sa figure 2 présente une vue de dessus d'un boîtier contenant une carte SIM occupant l'entier de la place à disposition, ce boîtier étant fermé par un couvercle. L'articulation du couvercle sur la boîte reste apparent quand le couvercle est fermé. Le dessin ne montre pas où est logée la partie garde-temps de la montre ainsi que son affichage. De plus, aucunes mesures ne semblent être prises pour assurer l'étanchéité de la montre et le système de blocage du couvercle en position fermée n'est pas dessiné. Egalement le coin oblique ou détrompeur de la carte SIM n'est pas mis à profit pour gagner en encombrement. On comprendra que tous les détails qui viennent d'être énumérés sont importants si l'on désire proposer un produit présentant un fonctionnement sûr, un aspect plaisant et un volume raisonnable.

La présente invention se propose donc de résoudre les problèmes évoqués ci-dessus tout en satisfaisant à la définition générique énoncée au premier paragraphe de cette description.

Dans ce but, la montre-téléphone de l'invention est remarquable en ce que des moyens sont mis en oeuvre pour assurer l'étanchéité du couvercle par rapport au logement quand ledit couvercle est rabattu sous le fond et y est maintenu au moyen d'un système de blocage et en ce que l'articulation est arrangée pour être confinée dans le fond, cette articulation se trouvant ainsi complètement cachée au regard du porteur de la montre.

Les caractéristiques et avantages de l'invention ressortiront de la description qui va suivre, faite en regard du dessin annexé et donnant à titre d'exemple explicatif, mais nullement limitatif, une forme avantageuse de réalisation de l'invention, dessin dans lequel :
- la figure 1 est une vue en plan de la partie fond de la montre-téléphone de l'invention, et
- la figure 2 est une coupe dans la vue en plan de la figure 1, ainsi qu'une vue de la carte SIM destinée à être incorporée dans le fond.

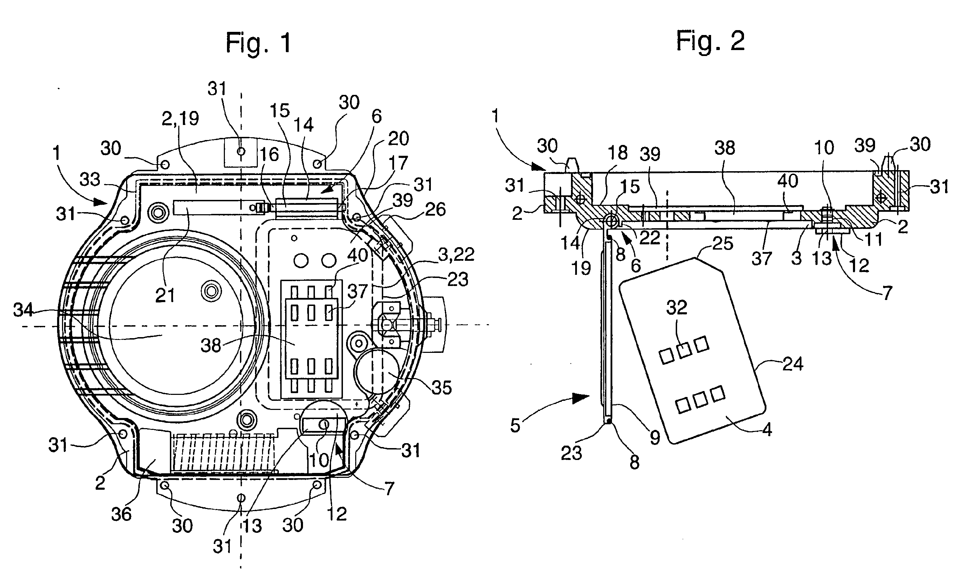

Comme on le voit sur les figures 1 et 2, la montre-téléphone destinée conjointement à afficher l'heure et à être utilisée dans un système de communications mobiles comporte un boîtier 1 composé d'une glace, d'une carrure et d'un fond 2. Dans les figures 1 et 2, seul le fond 2 est représenté. On comprendra que ce fond 2 vient s'ajuster sous une carrure portant une glace, la carrure enfermant entre autres le mouvement d'horlogerie et la glace laissant apparaître des aiguilles d'affichage de l'heure et portant un clavier destiné à composer les numéros de téléphone. La figure 2 montre des bossages 30 permettant de centrer et de positionner le fond 2 sous la carrure et des passages 31 permettant de fixer, au moyen de vis, le fond 2 à la carrure. Une gorge 33 est pratiquée à l'endroit de la jointure du fond 2 et de la carrure. Cette gorge est destinée à recevoir une garniture d'étanchéité non représentée.

La montre-téléphone comporte encore dans son fond 2 un haut-parleur ou écouteur 34 ainsi qu'un microphone 35. Une bobine 36, excitée à distance par un chargeur indépendant, fournit l'énergie de recharge à un accumulateur non représenté mais logé dans le fond 2.

Les figures montrent qu'un logement 3 est pratiqué dans le fond 2. Ce logement est susceptible de recevoir, de manière amovible une carte SIM 4, abréviation de Subscriber Indentity Module, permettant d'accéder au système de communications mobiles. Lorsque la carte SIM 4 se trouve dans le logement 3, les bornes 32 dont elle est pourvue sont en contact avec des lames 37 faisant partie d'un connecteur 38 soudé sur un circuit imprimé 39 au moyen de pattes 40.

On n'entrera pas ici dans la description complète d'une telle carte SIM, connue de nombreuses publications et normalisée par des standards internationaux, notamment les standards ISO/IEC 7810, 7816/1 et 7816/2. On mentionnera cependant que la carte utilisée ici présente des dimensions de l'ordre de 25 x 15 x 0,8 mm. Cette carte comporte six bornes 32 connectées intérieurement à une puce électronique contenant notamment des données définissant les modalités d'accès au système de communications mobiles. Cette carte SIM 4 comporte encore un coin 25 taillé obliquement appelé aussi détrompeur et qui permet de définir une orientation de ladite carte. Enfin on mentionnera encore que cette carte permet à l'utilisateur d'accéder au système de communications mobiles via un fournisseur ou un opérateur de réseau approprié. Elle contient aussi des données définissant les modalités d'accès audit système et permet en outre la mémorisation de données complémentaires relatives à l'utilisateur, tel un numéro d'identification personnel et/ou éventuellement un répertoire de numéros d'appels téléphoniques.

Les figures 1 et 2 montrent qu'un couvercle 5 assure la fermeture du logement 3, ce couvercle 5 étant attenant au fond 2 au moyen d'une articulation 6.

Selon l'invention et comme le montrent les figures, des moyens sont mis en oeuvre qui seront décrits en détail ci-après, pour assurer l'étanchéité du couvercle 5 par rapport au logement 3 quand ce couvercle est rabattu sous le fond 2. Les figures montrent également que le couvercle 5 est maintenu sous le fond 2 au moyen d'un système de blocage 7 dont un mode d'exécution sera décrit plus bas.

Toujours selon l'invention, la figure 1 fait particulièrement bien voir que l'articulation 6 est arrangée pour être entièrement confinée dans le fond 2 de sorte que, lorsque la montre est portée au poignet, cette articulation est complètement cachée au regard du porteur de la montre. L'exemple d'un tel arrangement sera décrit en détail plus loin.

Comme on le voit en figure 2, l'étanchéité du couvercle 5 par rapport au logement 3 est assurée par une garniture 8 faisant le tour de la face inférieure 9 du couvercle 5. Cette garniture 8 s'appuie sur le fond 2 et plus particulièrement sur le fond du logement 3 quand le couvercle 5 est fermé.

On va décrire maintenant le système de blocage 7 qui maintient fermé le couvercle 5 sur le logement 3. Les figures 1 et 2 montrent une tige 10 qui est retenue et qui tourne librement dans un trou 11 foré dans le fond 2. La tige 10 porte une tête à forme excentrique 12 dont la partie excentrée est susceptible de coiffer le couvercle 5 en position de blocage comme cela est apparent sur la figure 1. On notera que la tête 12 porte en outre une fente 13 dans laquelle peut être introduite une pièce de monnaie pour actionner le système de blocage.

La figure 1 montre bien comment est arrangée l'articulation 6 pour être entièrement confinée dans le fond 2 pour échapper totalement au regard du porteur de la montre. Le couvercle 5 porte un gond 14 ajusté et susceptible de pivoter autour d'une barrette 15. La barrette 15 est chassée dans des premier et second trous 16 et 17 percés dans la matière du fond 2 parallèlement aux faces principales 18 et 19 de ce fond 2. Le premier trou 16 est traversé de part en part par la barrette 15, tandis que le second trou 17 est borgne et ne reçoit que l'extrémité de ladite barrette. On évite ainsi que la barrette 15 n'apparaisse sur le flanc 20 que présente le fond 2, ce qui serait jugé comme disgracieux. La mise en place de la barrette 15 et son introduction dans les premier et second trous 16 et 17 sont rendues possible grâce à un canal ouvert 21 pratiqué sur la face inférieure 19 du fond 2 en prolongement de la barrette 15. La figure 1 montre que ce canal 15 est limité en longueur du côté gauche de la figure de sorte qu'il n'apparaît pas non plus sur le flanc du fond 2. Ainsi, quand la montre-téléphone est portée au poignet rien n'apparaît de l'articulation 6.

La figure 1 fait apparaître encore une particularité proposée par l'invention qui est de disposer la carte SIM 4 dans le fond 2 d'une manière particulière et, dans le but de gagner de la place. Pour cela, le logement 3 et le couvercle 6 qui le recouvre présentent chacun un pourtour (référencés respectivement 22 et 23) semblable au pourtour 24 de la carte SIM 4. Ainsi, le logement et le couvercle présentent-ils aussi un coin oblique similaire au détrompeur 25 de la carte SIM. La figure 1 montre clairement que ce coin oblique est disposé de façon à avoisiner un endroit oblique 26 présenté par le flanc 20 du fond 2. On met donc à profit la particularité de la carte SIM de présenter un coin oblique pour diminuer l'encombrement pris par la carte, son logement et son couvercle dans le fond et laisser ainsi plus de place aux autres composants devant se trouver dans ce fond.

## Revendications

1. Montre-téléphone destinée conjointement à afficher l'heure et à être utilisée dans un système de communications mobiles, cette montre comprenant un boîtier composé d'une glace, d'une carrure et d'un fond (2), un logement (3) pratiqué dans le fond (2) susceptible de recevoir, de manière amovible, une carte SIM (4) (Subscriber Identity Module) permettant d'accéder au système de communications mobiles et un couvercle (5) assurant la fermeture du logement, ce couvercle étant attenant au fond au moyen d'une articulation (6), **caractérisée par le fait que** des moyens sont mis en oeuvre pour assurer l'étanchéité du couvercle par rapport au logement quand ledit couvercle est rabattu sous le fond et y est maintenu au moyen d'un système de blocage (7) et que l'articulation (6) est arrangée pour être entièrement confinée dans le fond (2), cette articulation se trouvant ainsi complètement cachée au regard du porteur de la montre.

2. Montre-téléphone selon la revendication 1, **caractérisée par le fait que** l'étanchéité du couvercle (5) par rapport au logement (3) est assurée par une garniture (8) faisant le tour de la face inférieure (9) dudit couvercle (5), cette garniture s'appuyant sur le fond (2) quand le couvercle est fermé.

3. Montre-téléphone selon la revendication 1, **caractérisée par le fait que** le système de blocage (7) est une tige (10) retenue et tournant librement dans un trou (11), cette tige portant une tête excentrique (12) susceptible de coiffer le couvercle (5) en position de blocage, ladite tête portant en outre une fente (13) dans laquelle peut être introduite une pièce de monnaie pour actionner ledit système de blocage.

4. Montre-téléphone selon la revendication 1, **caractérisée par le fait que** l'articulation (6) consiste en au moins un gond (14) porté par le couvercle (59, ce gond étant susceptible de pivoter autour d'une barrette (15) reçue dans des premier (16) et second (17) trous percés dans la matière du fond (2) parallèlement à ses faces principales (18, 19), le premier trou (16) étant traversant et le second (17) borgne pour éviter que la barrette (15) n'apparaisse sur le flanc (20) que présente le fond (2), un canal (21) ouvert étant pratiqué sur la face inférieure (19) du fond (2) en prolongement de la barrette (15) pour permettre l'introduction de cette dernière dans lesdits premier (16) et second (17) trous qui la supportent.

5. Montre-téléphone selon la revendication 1, **caractérisée par le fait que** le logement (3) et le couvercle (5) présentent des pourtours (22, 23) semblables au pourtour (24) de la carte SIM (4), cette dernière présentant un pourtour normalisé muni d'un coin oblique (25) ou détrompeur, ledit détrompeur étant disposé pour avoisiner un endroit oblique (26) que présente le flanc (20) du fond (2) pour limiter l'encombrement pris par la carte SIM (4), son logement (3) et son couvercle (5).

## Claims

1. Telephone watch intended both to display the time and to be used in a mobile communication system, this watch including a case formed of a crystal, a middle part and a back cover (2), a housing (3) made in the back cover (2) capable of accommodating, in a removable manner, a SIM (Subscriber Identity Module) card (4) allowing access to the mobile communication system and a cover (5) closing the housing, this cover being attached to the back cover by means of a hinge (6), **characterised in that** means are implemented to assure the sealing of the cover with respect to the housing when said cover is hinged down under the back cover and is held there by means of a locking system (7) and **in that** the hinge (6) is arranged to be entirely confined in the back cover (2), this hinge being thus completely hidden from the sight of the wearer of the watch

2. Telephone watch according to claim 1, **characterised in that** the sealing of the cover (5) with respect to the housing (3) is assured by a sealing gasket (8) which goes all the way round the lower face (9) of said cover (5), this gasket resting on the back cover (2) when the cover is closed.

3. Telephone watch according to claim 1, **characterised in that** the locking system (7) is a stem (10) held and rotating freely in a hole (11), this stem carrying an eccentric head (12) able to cap the cover (5) in the locking position, said head further carrying a slot (13) in which a coin can be inserted to actuate said locking system.

4. Telephone watch according to claim 1, **characterised in that** the hinge (6) consists in at least one hinge pin (14) carried by the cover (5), this hinge pin being able to pivot about a bar (15) accommodated in first (16) and second (17) holes made in the material of the back cover (2) parallel to its main faces (18, 19), the first hole (16) being a through hole and the second (17) a blind hole to prevent the bar (15) appearing on the side (20) of the back cover (2), an open channel (21) being made on the lower face (19) of the back cover (2) in alignment with said bar (15) to allow the latter to be introduced into said first (16) and second (17) holes which support it.

5. Telephone watch according to claim 1, **characterised in that** the housing (3) and the cover (5) have similar contours (22, 23) to the contour (24) of the SIM card (4), the latter having a standardised contour provided with a slanting corner (25) or polarising slot, said polarising slot being arranged to be close to an oblique location (26) of the side (20) of the back cover (2) to limit the space taken by the SIM card (4), its housing (3) and its cover (5).

## Patentansprüche

1. Telefon-Uhr, ausgestaltet zum sowohl Anzeigen der Uhrzeit als auch zum Verwenden in einem mobilen Kommunikationssystem, wobei die Uhr ein Gehäuse, das aus einem Glas, einem Gehäusemittelteil und einem Boden (2) zusammengesetzt ist, einen im Boden (2) angelegten Aufnahmeraum (3) geeignet zur Aufnahme auf lösbare Weise einer SIM (Subscriber Identity Module)-Karte (4), die einen Zugriff auf ein mobiles Kommunikationssystem erlaubt, und eine Abdeckung (5), die den Verschluß des Aufnahmeraums sicherstellt, umfaßt, wobei die Abdeckung an dem Boden mittels eines Gelenk (6) angrenzt, **dadurch gekennzeichnet, daß** Mittel zum Gewährleisten der Dichtheit der Abdeckung (5) in bezug auf den Aufnahmeraum vorgesehen, wenn die Abdeckung unter den Boden zurückgeklappt und dort mittels eines Verriegelungssystems (7) gehalten wird, und daß das Gelenk (6) ganz zurückgezogen im Boden (2) ausgestaltet ist, wobei das Gelenk vollständig vor dem Blick des Trägers der Uhr verborgen ist.

2. Telefon-Uhr nach Anspruch 1, **dadurch gekennzeichnet, daß** die Dichtheit der Abdeckung (5) in bezug auf den Aufnahmeraum (3) gewährleistet ist durch eine Armatur (8), die den Umfang der Innenfläche (9) der Abdeckung (5) bildet, wobei sich die Armatur auf den Boden (2) stützt, wenn die Abdeckung geschlossen ist.

3. Telefon-Uhr nach Anspruch 1, **dadurch gekennzeichnet, daß** das Verriegelungssystem (7) ein in einem Loch (11) gehaltener und frei drehbarer Stift (10) ist, wobei der Stift einen exzentrischen Kopf (12) trägt, der geeignet ist, die Abdeckung (5) in der Blockierungsposition zu überdecken, wobei der Kopf ferner einen Schlitz (13) aufweist, in den eine Geldmünze einführbar ist, um das Verriegelungssystem zu betätigen.

4. Telefon-Uhr nach Anspruch 1, **dadurch gekennzeichnet, daß** das Gelenk (6) mindestens aus einer Haspe (14), die durch die Abdeckung (5) getragen wird, besteht, wobei die Haspe fähig ist, sich um eine Federhausspindel (15) zu drehen, die in einem ersten (16) und einem zweiten (17) Stichloch in dem Material des Bodens (2) parallel zu seinen Hauptflächen (18, 19) aufgenommen ist, wobei das erste Loch (16) quer verläuft und das zweite Loch (17) ein Blindloch ist, um zu vermeiden, daß die Federhausspindel (15) auf der Seite (20), die der Boden (2) aufweist, erscheint, wobei ein offener Kanal (21) über der Innenfläche (19) des Bodens (2) in einer Verlängerung der Federhausspindel (15) ausgestaltet ist, um das Einführen der Federhausspindel (15) in das erste (16) und zweite (17) Loch zu erlauben, die sie tragen.

5. Telefon-Uhr nach Anspruch 1, **dadurch gekennzeichnet, daß** der Aufnahmeraum (3) und die Abdeckung (5) ähnliche Umrandungen (22, 23) wie die Umrandung (24) der SIM-Karte (4) aufweisen, wobei die SIM-Karte (4) eine mit einer schrägen Ecke (25) oder einer Unverwechselbarkeitseinrichtung versehene normierte Umrandung aufweist, wobei die Unverwechselbarkeitseinrichtung angeordnet ist, um an eine schräge Stelle (26) anzugrenzen, die die Seite (20) des Bodens (2) aufweist, um den Raumbedarf für die SIM-Karte (4), ihren Aufnahmeraum (3) und ihre Abdeckung (5) zu begrenzen.
